# FASCICULE DE BREVET EUROPEEN

(11) **EP 2 883 444 B1**
(45) Date de publication et mention de la délivrance du brevet: **25.05.2016**
(21) Numéro de dépôt: 14306989.6
(22) Date de dépôt: 10.12.2014
(51) Int. Cl.: A01G 17/02

(54) **Dispositif d'effeuillage double flux**
Entlaubungsvorrichtung mit doppeltem Luftstrom
Dual-flow stripping device

(30) Priorité: 13.12.2013 FR 1362586
(43) Date de publication de la demande: 17.06.2015
(73) Titulaire: PELLENC (Société Anonyme), 84120 Pertuis (FR)
(72) Inventeur: Gialis, Jean-Marc, 84460 Cheval Blanc (FR); Soulier, Christian, 84240 La Tour D'Aigues (FR)
(74) Mandataire: Nuss, Laurent

(56) Documents cités:
- EP-A1- 0 998 847
- FR-A1- 2 897 752

## Description

La présente invention concerne le domaine de la culture de la vigne et plus particulièrement les machines à effeuiller la vigne et a pour objet un dispositif d'effeuillage à double flux.

On sait que dans le domaine spécifique de la vigne, il est très important, voire crucial, de diminuer la quantité de feuilles présentes dans la zone fructifère des plants de vigne et ce plusieurs fois par saison aux fins de favoriser ou d'obtenir les objectifs suivants :
- l'aération des grappes de raisin pour limiter l'apparition de la pourriture et accélérer leur séchage,
- l'ensoleillement des grappes de raisin pour accélérer et améliorer leur maturation, notamment la coloration (pellicule du raisin plus épaisse),
- la pénétration des traitements phytosanitaires pour améliorer leur efficacité,
- l'éclaircissage ou la vendange manuelle par une meilleure visibilité des grappes et un temps de main d'oeuvre singulièrement diminué,
- le cas échéant, la vendange mécanique par une limitation de déchets verts dans la vendange et les pertes de jus dues à l'aspiration des feuilles,
- respecter les grappes de raisin quelque soit leur degré de maturation.

L'effeuillage des vignes a été réalisé manuellement durant de nombreuses années et si c'est encore parfois le cas, il est actuellement généralement réalisé mécaniquement grâce à des machines prévues à cet effet.

Toutefois, si ces machines ont permis d'apporter de nombreuses solutions permettant de faciliter les opérations d'effeuillage des vignes, elles ne permettent pas d'assurer une qualité d'effeuillage optimale pour satisfaire les objectifs précités.

De telles machines sont décrites et illustrées notamment dans les documents suivants :
Le document WO 2005022985 a pour objet un dispositif d'effeuillage comprenant une enceinte dont l'extrémité proximale repose sur le matelas végétal et son extrémité distale opposée comporte une turbine aspirant les feuilles au niveau de l'extrémité proximale qui sont alors pincées par deux rouleaux animés d'un mouvement contrarotatif, c'est-à-dire tournant chacun dans un sens opposé à celui de l'autre rouleau, afin d'exercer une force suffisante d'arrachement de la feuille.

Toutefois, avec un dispositif du type de celui décrit dans le document WO 2005022985, l'aspiration du matelas végétal est gênée par la présence des rouleaux qui forment un écran au flux d'air d'aspiration des feuilles, ce qui nécessite une puissance d'aspiration importante générant un coût énergétique élevé. En outre, avec un tel dispositif les grappes de raisin peuvent être aspirées ou blessées. De plus tous les déchets passent au travers de la turbine encrassant les pales de cette dernière et diminuant son rendement d'aspiration.

Le principe technique général utilisé dans la grande majorité de ces machines repose ainsi sur une aspiration des feuilles par un flux d'air d'aspiration généré par, ou associé à, un système d'aspiration à partir d'une seule turbine, puis sur une coupe et une évacuation de ces dernières. De telles machines sont décrites notamment dans les documents suivants :
Le document FR 2 842 069 concerne une effeuilleuse destinée à l'effeuillage sélectif de la vigne comprenant au moins une tête d'effeuillage munie d'un tambour tournant comportant une paroi latérale cylindrique ajourée réalisée dans un matériau souple et déformable et reliant ses deux extrémités libres à des moyens d'entraînement en rotation de ce dernier, une turbine aspirante permettant de générer un flux d'air aspirant à travers la paroi ajourée, un déflecteur pour canaliser le flux d'air et dont la forme est déterminée pour optimiser le rendement d'aspiration. La turbine aspirante est placée à l'une des extrémités ou en haut du tambour selon un axe parallèle à l'axe de ce dernier ou vertical. Avec cette effeuilleuse, les feuilles sont alors plaquées sur la paroi latérale du tambour puis conduites à un dispositif de coupe permettant de les sectionner au plus près de la branche de la vigne.

Cependant, avec une effeuilleuse du type de celle décrite dans le document FR 2 842 069, la position de la turbine ne permet pas ici une aspiration et un plaquage homogène des feuilles le long du tambour rotatif.

Le document FR 2 897 752 a pour objet une machine d'effeuillage comprenant une tête munie de deux tambours contrarotatifs à savoir un premier tambour perforé et un second tambour coopérant avec ledit premier tambour qui comporte des moyens d'aspiration à l'une de ses extrémités de manière à pouvoir aspirer les feuilles du matelas végétal avec lequel il est en contact. Les feuilles sont ensuite pincées entre les deux tambours contrarotatifs et arrachées de leurs branches.

Toutefois, avec une machine du type de celle du document FR 2 897 752 l'aspiration des feuilles ne se fait pas de manière homogène d'un côté à l'autre du tambour, c'est-à-dire que l'aspiration à l'extrémité opposée à celle comportant les moyens d'aspiration est plus faible, ce qui ne permet pas d'obtenir une aspiration efficace sur toute la longueur du premier tambour et, partant, un placage efficace des feuilles de vignes sur toute la longueur de ce tambour. De ce fait, de nombreuses feuilles ne sont pas pincées ou mal pincées entre les deux tambours contrarotatifs, ce qui ne permet pas d'assurer une qualité optimale de l'effeuillage.

En outre avec les systèmes de l'art antérieur tels que ceux faisant l'objet des documents susvisés et comprenant une tête munie de tambours, il est difficilement concevable de rendre la tête d'effeuillage réversible par rapport à son axe longitudinal parallèle aux tambours, c'est-à-dire de pouvoir orienter cette dernière en sens inverse en la renversant, c'est-à-dire en la faisant pivoter de 180°, depuis sa position de base, dans le plan contenant son axe longitudinal. En effet, compte tenu de l'aspiration d'air variable sur la hauteur ou le long du tambour ajouré permettant le placage des feuilles, ces systèmes ne peuvent pas permettre d'obtenir une homogénéité du travail lorsque la tête d'effeuillage est ainsi renversée ou mise à l'envers, par rapport à son axe longitudinal parallèle aux axes des tambours, pour réaliser notamment l'effeuillage dans un rang de vigne opposé.

La présente invention a pour but de pallier ces inconvénients en proposant un dispositif d'effeuillage double flux permettant d'obtenir une qualité optimale de l'effeuillage que ce soit dans une position de base ou renversée.

A cet effet, le dispositif d'effeuillage double flux, plus particulièrement destiné à l'effeuillage des feuilles de la vigne, qui comprend au moins une tête d'effeuillage munie de deux tambours contrarotatifs, à savoir un premier tambour comportant une paroi latérale cylindrique ajourée reliant ses deux extrémités libres et un second tambour apte à coopérer en rotation avec le premier tambour, un système d'aspiration d'air capable de créer une dépression d'air dans ledit premier tambour et un système d'entraînement en rotation des tambours, se caractérise essentiellement en ce que les deux extrémités libres du premier tambour sont ouvertes, en ce que le système d'aspiration comprend, d'une part, deux ouvertures d'aspiration principales, à savoir une première ouverture d'aspiration principale et une seconde ouverture d'aspiration principale et, d'autre part, un système de turbine(s) et des moyens de canalisation d'air permettant de relier ce dernier auxdites ouvertures d'aspiration principales et en ce que chaque extrémité libre ouverte du premier tambour est connectée à l'une desdites ouvertures d'aspiration principales de sorte à générer, grâce audit système de turbine(s), deux flux d'aspiration d'air dans le premier tambour, l'un passant à travers l'une desdites ouvertures et l'autre passant à travers l'autre ouverture, ayant pour effet de créer ensemble une dépression, à double flux d'air, globalement homogène dans ledit premier tambour, sensiblement sur toute sa longueur et en ce qu'il comprend un système de motorisation, comprenant au moins un moteur, capable d'actionner le système d'entraînement et le système de turbine(s).

Un tel dispositif selon la présente invention permet d'améliorer notablement la qualité du placage des feuilles de vigne sur la totalité ou la quasi-totalité de la longueur du premier tambour ou tambour ajouré lorsque celui-ci est en contact avec le matelas végétal induisant un pincement plus efficace entre les deux tambours qu'avec les machines connues.

Il est bien compris que le terme turbine, selon la présente invention, est entendu comme un moyen permettant de générer une dépression d'air, et peut être constitué par exemple par un ventilateur axial, un ventilateur centrifuge, une combinaison de ces deux techniques ou une pluralités de ventilateurs associés en série et entrainés alors par les mêmes moyens moteurs.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective de trois quart, côté frontal, d'un dispositif d'effeuillage selon la présente invention dans un mode de réalisation préférentiel et dans une forme de réalisation préférentielle du système de turbine et du système de motorisation, et comprenant une seule tête d'effeuillage,
- la figure 2 montre une vue arrière du dispositif représenté sur la figure 1, dans une position renversée verticalement,
- la figure 3 montre une vue de dessous du dispositif représenté sur la figure 2,
- la figure 4 montre une vue de profil du dispositif représenté sur la figure 2, côté opposé à l'ouverture de sortie d'air,
- la figure 5 montre une vue en coupe transversale, selon N-N, du dispositif représente sur la figure 4,
- la figure 6 montre une vue partielle du dispositif représenté sur la figure 3,
- la figure 7 montre une vue en coupe transversale, selon S-S, du dispositif représenté sur la figure 6,
- la figure 8 montre une vue en coupe transversale, selon T-T, du dispositif représenté sur la figure 3.

Les figures montrent un dispositif d'effeuillage double flux, plus particulièrement destiné à l'effeuillage des feuilles de la vigne, comprenant au moins une tête 1 d'effeuillage munie de deux tambours 2 et 3 contrarotatifs, à savoir un premier tambour 2 comportant une paroi latérale cylindrique ajourée 2a reliant ses deux extrémités libres et un second tambour 3 apte à coopérer en rotation avec le premier tambour 2, un système d'aspiration 4 d'air capable de créer une dépression d'air dans l'espace interne du premier tambour 2 et un système d'entraînement 5 en rotation des tambours 2 et 3.

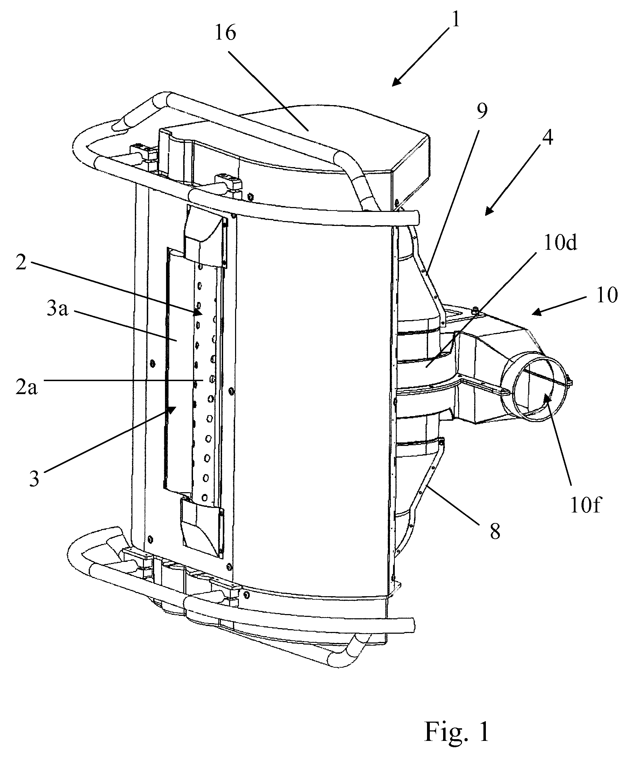

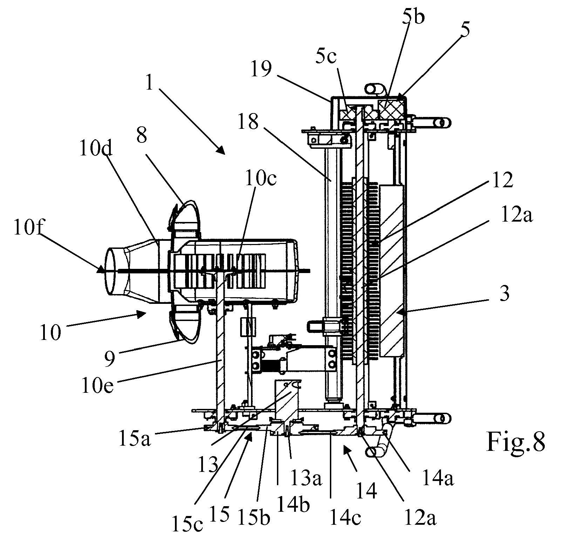

Le second tambour 3 peut comporter une paroi latérale cylindrique 3a (figure 1), de préférence pleine mais pouvant être ajourée, reliant ses deux extrémités libres. Il peut être également un cylindre plein (figure 8).

On entendra par deux tambours contrarotatifs 2 et 3 coopérant entre eux, deux tambours 2 et 3 capables d'être actionnés en rotation autour de leurs axes respectifs 2b et 3b, chacun dans un sens de rotation inverse ou opposé à celui de l'autre, ce en vue de permettre l'arrachage des feuilles par pincement de ces dernières entre les deux tambours 2 et 3.

Conformément à la présente invention, les deux extrémités libres du premier tambour 2 sont ouvertes et le système d'aspiration 4 comprend, d'une part, deux ouvertures d'aspiration principales 6 et 7, à savoir une première ouverture d'aspiration principale 6 et une seconde ouverture d'aspiration principale 7 et, d'autre part, un système de turbine(s) 10 et des moyens de canalisation 8, 9 permettant de relier ce dernier auxdites ouvertures d'aspiration principales 6 et 7. En outre chaque extrémité libre ouverte du premier tambour 2 est connectée à l'une desdites ouvertures d'aspiration principales 6 ou 7 de sorte à générer, grâce audit système de turbine(s), deux flux d'aspiration d'air dans le premier tambour 2, l'un passant à travers l'une desdites ouvertures et l'autre passant à travers l'autre ouverture, ayant pour effet de créer ensemble une dépression, à double flux d'air, globalement homogène dans ledit premier tambour, sensiblement sur toute sa longueur, c'est-à-dire dans une orientation verticale du tambour sur toute sa hauteur.

Toujours conformément à l'invention, le dispositif comprend en outre un système de motorisation, comprenant au moins un moteur 13, capable d'actionner le système d'entraînement 5 et le système de turbine(s) 10.

Le ou chaque moteur 13 du système de motorisation peut être un moteur lrydraulique ou électrique ou autre moteur d'entraînement.

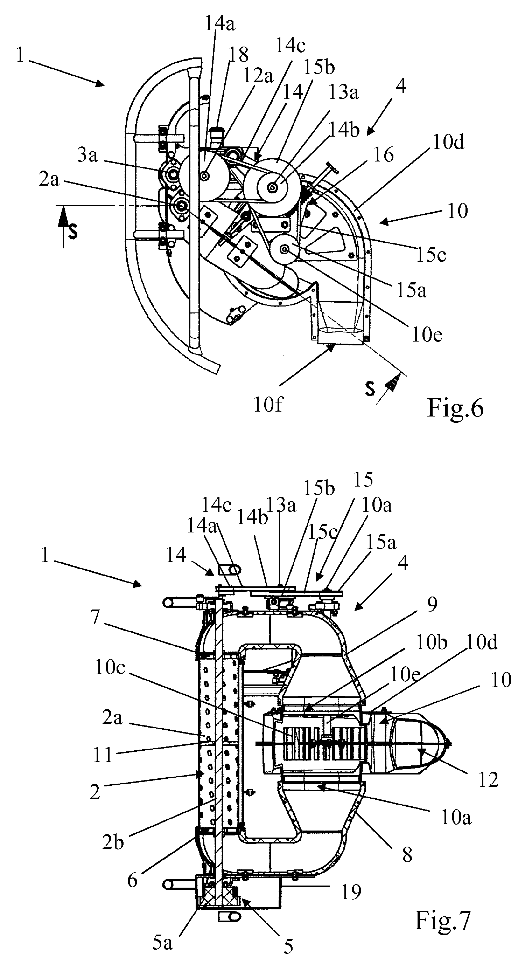

Dans un mode de réalisation préférentiel de la présente invention, le système de turbine(s) 10 peut comprendre une ou deux turbines aspirante 10c actionnée(s) par le système de motorisation. A cet effet, le système de turbine(s) 10 peut comprendre deux ouvertures d'aspiration intermédiaires 10a et 10b, à savoir une première ouverture d'aspiration intermédiaire 10a et une seconde ouverture d'aspiration intermédiaire 10b, permettant de relier le système de turbine(s) 10 respectivement aux ouvertures d'aspiration principales 6 et 7 via les moyens de canalisation d'air 8, 9 (figure 7).

Dans une première forme de réalisation telle que représenté sur les figures annexées, le système de turbine 10 peut comprendre une turbine aspirante 10c, c'est-à-dire une seule turbine, commune aux deux ouvertures d'aspiration 6 et 7 principales. Le système de turbine peut alors être prévu, à partir d'une dépression d'air créée par ladite turbine, pour générer les deux flux d'aspiration d'air.

Dans une deuxième forme de réalisation non représentée sur les figures annexées, le système de turbines 10 peut comprendre deux turbines aspirantes 10c. Le système de turbines peut alors être prévu, d'une part, à partir d'une dépression d'air créée par l'une desdites turbines, pour générer l'un des deux flux d'aspiration d'air et, d'autre part, à partir d'une dépression d'air créée par l'autre turbine, pour générer l'autre flux d'aspiration d'air.

On comprendra alors que dans le cas où le système de turbine comprend une seule turbine, les deux flux d'aspiration d'air dans le premier tambour sont associés à une seule turbine et dans le cas où le système de turbines comprend deux turbines, chaque flux d'aspiration d'air dans le premier tambour est associé à l'une des deux turbines.

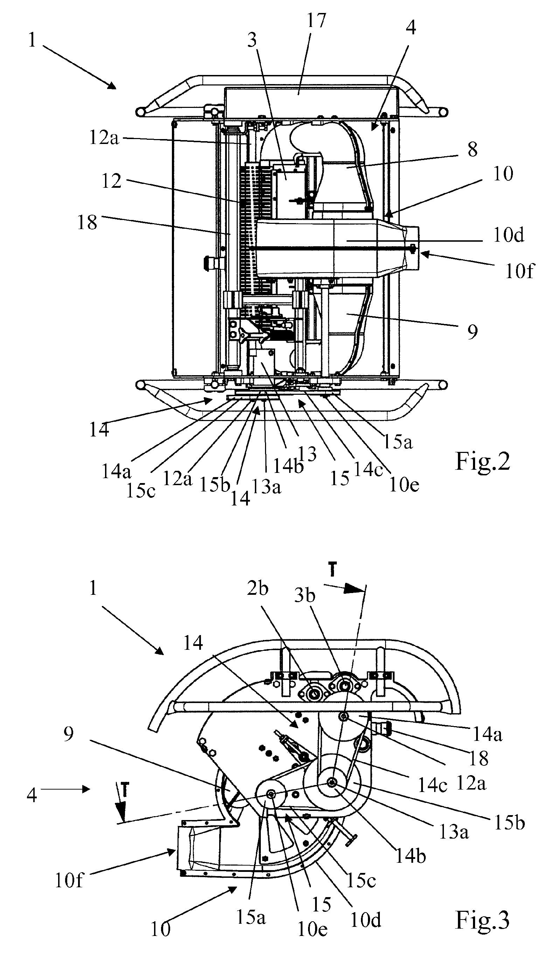

Dans une forme de réalisation préférentielle du système de motorisation, comme on peut le voir notamment sur les figures 2, 4 et 8, celui-ci peut comprendre un moteur 13 unique, c'est-à-dire un seul moteur, capable, à lui seul, d'actionner à la fois le système d'entraînement 5 et la ou chaque turbine 10c du système de turbine(s) 10.

Dans une forme de réalisation préférentielle des moyens de canalisation d'air 8, 9, ceux-ci peuvent consister en deux conduits 8 et 9, à savoir un premier conduit 8, dont l'une des extrémités peut former, directement ou indirectement, la première ouverture d'aspiration principale 6 et l'autre extrémité peut être apte à être connectée à la première ouverture d'aspiration intermédiaire 10a et un second conduit 9, dont l'une des extrémités peut former, directement ou indirectement, la seconde ouverture d'aspiration principale 7 et l'autre extrémité peut être apte à être connectée à la seconde ouverture d'aspiration intermédiaire 10b (figure 7).

De préférence, les deux conduits 8 et 9 peuvent présenter une longueur sensiblement identique de sorte à préserver un équilibre des charges d'aspiration entre les deux extrémités libres du premier tambour 2 connectées auxdits conduits respectifs.

Dans une forme préférentielle de la turbine aspirante 10c, l'axe 10e, c'est-à-dire l'arbre de rotation, de cette dernière peut être prévu pour s'étendre, de préférence, sensiblement parallèlement aux axes 2b et 3b respectifs des tambours 2 et 3 (figures 3, 5, 6, 7, 8). De préférence, dans le cas où le système de turbine comprend une turbine aspirante 10c, celle-ci peut s'étendre latéralement dans un plan coupant perpendiculairement l'axe du premier tambour 2 sensiblement à égale distance des extrémités libres de ce dernier (voir notamment figures 7 et 8).

Dans le cas où le système de turbine 10 comprend une turbine, celui-ci peut comprendre une enceinte 10d fermée et la turbine aspirante 10c peut être logée dans l'enceinte 10d qui peut comprendre, d'une part, deux parois opposées s'étendant de part et d'autre de la turbine aspirante 10c de préférence sensiblement perpendiculairement à l'axe 10e de cette dernière. En outre la première ouverture d'aspiration intermédiaire 10a peut être pratiquée dans l'une des parois opposées et la seconde ouverture d'aspiration intermédiaire 10b peut être pratiquée dans l'autre paroi opposée. D'autre part, une ouverture de sortie d'air 10f peut être pratiquée dans l'une desdites parois ou, de préférence comme on peut le voir sur les figures, dans une autre paroi, préférentiellement sensiblement perpendiculaire auxdites parois opposées (figures 1, 2, 3 et 5).

Dans le cas où le système de turbines 10 comprend deux turbines, celui-ci peut comprendre soit une enceinte fermée, soit, le cas échéant, deux enceintes fermées indépendantes l'une de l'autre. En outre, chaque turbine aspirante peut être logée soit dans l'enceinte, soit, le cas échéant, dans l'une des deux enceintes. La ou chaque enceinte peut être fermée par une paroi et soit les première et seconde ouvertures d'aspiration intermédiaires peuvent être pratiquées dans la paroi de l'enceinte, soit, le cas échéant, la première ouverture d'aspiration intermédiaire peut être pratiquée dans la paroi de l'une des deux enceintes et la seconde ouverture d'aspiration intermédiaire peut être pratiquée dans la paroi de l'autre enceinte. D'autre part, soit une ouverture de sortie d'air peut être pratiquée dans la paroi de l'enceinte soit, le cas échéant, deux ouvertures de sortie d'air peuvent être pratiquées respectivement chacune dans la paroi de l'une des deux enceintes.

Par ailleurs, la présente invention peut prévoir avantageusement que le premier tambour 2 comporte une cloison de séparation 11, pleine ou ajourée, s'étendant, de préférence transversalement, dans l'espace interne du premier tambour 2, de préférence en s'étendant dans un plan situé sensiblement à égale distance des extrémités libres du premier tambour 2, de sorte à séparer ledit espace interne en deux espaces d'aspiration, de préférence, le cas échéant, de dimensions sensiblement égales, connectés chacun à l'une des ouvertures d'aspirations principales 6 ou 7. La cloison de séparation 11 permet ainsi d'éviter ou d'empêcher les interactions d'aspiration des deux flux et de préserver l'équilibre des charges de l'aspiration de chaque côté du premier tambour 2 (figure 7). Plus particulièrement la cloison de séparation 11 permet d'éviter ou de réduire les interactions entre les deux flux d'aspiration d'air conduisant au phénomène de pompage, c'est-à-dire de variation cyclique de la dépression dans cette zone conduisant à un flux d'aspiration non homogène.

D'autre part, le dispositif selon la présente invention peut comprendre en outre un éjecteur 12 adapté pour être mis en contact de frottement avec le premier tambour 2 et, éventuellement avec le second tambour 3, pour permettre l'éjection des feuilles arrachées par un déplacement relatif de l'éjecteur 12 par rapport audit premier tambour 2, le cas échéant le second tambour 3. L'éjecteur 12 permet d'éviter que les feuilles arrachées obstruent le premier tambour 2 ajouré (figures 2, 4 et 8) et d'évacuer les feuilles par simple gravité évitant le colmatage de la turbine ou du ventilateur.

Dans une forme de réalisation préférentielle de l'éjecteur 12, celui-ci peut être un élément allongé, de préférence de forme globalement cylindrique, tel que par exemple une brosse rotative, et il peut être monté en rotation autour d'un axe 12a s'étendant, de préférence, sensiblement parallèlement aux axes 2b et 3b respectifs des deux tambours 2 et 3. L'éjecteur peut être actionné en rotation grâce au ou à l'un des moteurs 13 d'entraînement via des premiers moyens d'entraînement 14 (figures 2, 4, 7, 8).

Dans une forme préférentielle, le système d'entraînement 5 des tambours 2 et 3 est activé par la rotation de l'éjecteur 12. Ainsi, les tambours 2 et 3 peuvent être actionnés en rotation, via le système d'entraînement 5, sous l'effet de la rotation de l'éjecteur 12 lui-même activé directement ou indirectement par le ou l'un des moteurs 13. En outre, de préférence, l'axe 12a de l'éjecteur 12 peut être relié, par l'une de ses extrémités, aux premiers moyens d'entraînement 14 et, par son autre extrémité, au système d'entraînement 5 (figures 7 et 8).

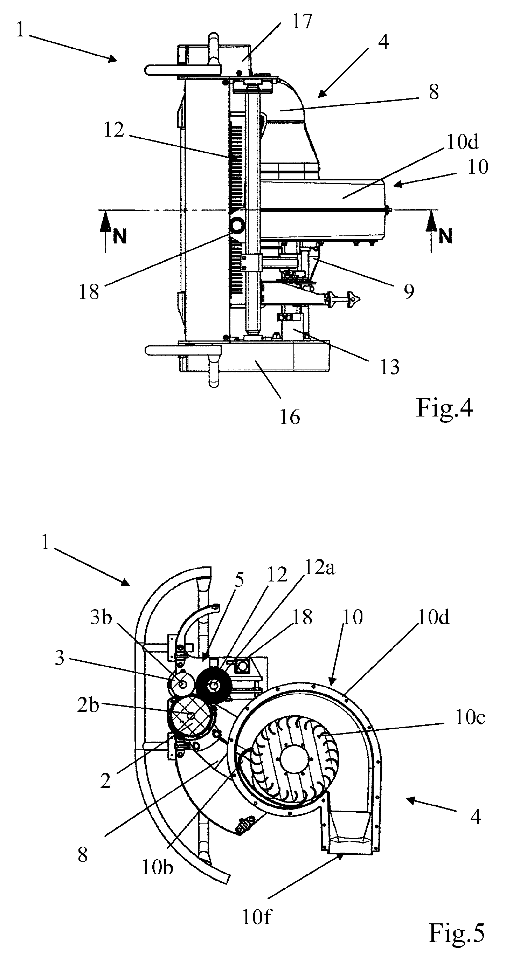

De préférence, le système d'entraînement 5 peut consister en un système d'engrenage à trois roues dentées 5a, 5b et 5c, à savoir une première roue dentée 5a (figure 7) entraînant l'axe de rotation 2b du premier tambour 2 ajouré, une seconde roue dentée 5b (figure 8) entraînant l'axe de rotation 3b du second tambour 3 et une troisième roue dentée 5c (figure 8) entraînée en rotation par l'axe de rotation 12a de l'éjecteur 12. En outre les roues dentées 5a, 5b et 5c peuvent être engrenées l'une dans l'autre de sorte à permettre la transmission du mouvement de rotation de l'éjecteur 12 aux deux tambours 2 et 3 (Figures 5 et 7).

De préférence, l'axe 10e de la ou de chaque turbine aspirante 10c peut être actionné en rotation au moyen du ou de l'un des moteurs 13 actionnant l'éjecteur 12 et les tambours 2 et 3, ce par l'intermédiaire de seconds moyens d'entraînement 15 (figure 2, 3, 6, 7, 8).

Les premiers moyens d'entraînement 14 permettant l'entraînement en rotation de l'éjecteur 12 peuvent consister en deux poulies 14a et 14b, à savoir une première poulie 14a et une seconde poulie 14b, reliées entre elles par une première courroie d'entraînement 14c. La première poulie 14a peut être montée axialement sur l'axe 12a de l'éjecteur 12 et la seconde poulie 14b peut être montée axialement sur l'axe 13a du ou de l'un des moteurs 13 (figure 2, 3, 6, 7, 8).

Les seconds moyens d'entraînement 15 permettant l'entraînement en rotation de l'axe 10e de la ou de chaque turbine 10 peuvent consister en deux poulies 15a et 15b supplémentaires, à savoir une troisième poulie 15a et une quatrième poulie 15b, reliées entre elles par une seconde courroie d'entraînement 15c. La troisième poulie 15a peut être montée axialement, directement ou indirectement, sur l'axe 10e de la ou de chaque turbine 10 et la quatrième poulie 15b peut être montée axialement, directement ou indirectement, sur l'axe 13a du ou de chaque moteur 13.

On comprendra que dans le cas de deux turbines, la troisième poulie peut être montée directement sur l'axe des deux turbines si leurs axes sont confondus, ou indirectement par exemple par l'intermédiaire d'une ou plusieurs poulies ou autre élément de renvoi, sur chaque axe des turbines si leurs axes ne sont pas confondus. Il en est de même pour la quatrième poulie 15b dans le cas où le système de motorisation comprend un ou plusieurs moteurs.

On peut voir également, notamment sur les figures 1, 2 et 4, que la présente invention peut prévoir deux capots de protection 16 et 17 pour protéger les différents moyens d'entraînement et d'engrenage précités. Par un exemple un premier capot 16 peut être prévu pour protéger les premiers et seconds moyens d'entraînement 14 et 15 et un second capot 17 peut être prévu pour protéger le système d'entraînement 5 des tambours 2 et 3.

Comme on peut le voir sur l'ensemble des figures, un tel dispositif, selon la présente invention, peut comprendre un châssis ou autre structure support 18 permettant de supporter et de maintenir les éléments constitutifs dudit dispositif selon un agencement adaptée. Il peut encore comprendre deux platines support 19 et 20 fixées directement ou indirectement au châssis 18 et permettant de supporter notamment les axes des 2b, 3b, 10e, 12a et 13a respectivement du premier tambour 2, du second tambour 3, de la turbine aspirante 10c, de l'éjecteur 12 et du ou des moteurs 13.

Un tel agencement peut prévoir que le système de turbine(s) 10 soit situé sensiblement au niveau des axes médians des tambours 2 et 3, ceci notamment lorsque la présente invention prévoit de préférence que les premier et second conduits 8 et 9 soient sensiblement de même longueur. Cet agencement peut également prévoir que l'axe de l'ouverture de sortie 10f s'étende sensiblement dans le plan médian du système de turbine(s) 10. De préférence elle peut prévoir que le plan médian du système de turbine(s) 10 coupe transversalement les tambours 2 et 3 sensiblement en leur milieu. Il peut encore prévoir que les premiers et seconds moyens d'entraînement 14 et 15 et le système d'entraînement 5 soient situés, de préférence, de part et d'autre de l'ensemble composé du système de turbine(s) 10, des tambours 2 et 3 et des conduits 8 et 9, c'est-à-dire aux deux extrémités dudit ensemble, selon un axe parallèle aux axes de rotation des tambours 2 et 3. Chaque extrémité dudit ensemble peut alors comprendre l'une des deux platines supports 19 et 20.

Un tel agencement permet alors d'offrir un dispositif compact et économique, tout en permettant une réversibilité du dispositif à la fois fonctionnelle grâce aux deux flux d'air provenant des deux aspirations d'air à chacune des extrémités du premier tambour 2 et visuelle grâce à la symétrie d'ensemble procurée par ledit agencement.

Le dispositif d'effeuillage selon la présente invention permet donc, outre les avantages déjà précités, d'obtenir les résultats et les avantages suivants, notamment par rapport aux machines actuelles telles que, par exemple, celles de l'art antérieur précité :
- effeuillage homogène sur toute la surface du matelas végétal en contact avec le tambour ajouré ou premier tambour,
- une homogénéité du travail lorsque le dispositif d'effeuillage est renversée, c'est-à-dire pivoté d'environ 180° dans un plan sensiblement vertical, pour effeuiller le rang opposé de végétation et plus particulièrement de vigne,
- amélioration, grâce à la réversibilité du dispositif, du nettoyage de la tête en éliminant dans cette opération les feuilles qui auraient pu s'accumuler dans la machine,
- une puissance d'aspiration notablement inférieure à celle exigée par les systèmes actuels et de l'art antérieur et notamment par rapport aux systèmes réalisant une aspiration au travers d'une grille avec un ventilateur axial, ce grâce à une surface d'aspiration selon la présente invention réduite, inférieure à celle desdits systèmes, favorisant l'efficacité et la rapidité de l'effeuillage.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, restant dans le cadre des revendications suivantes.

## Revendications

1. Dispositif d'effeuillage double flux, plus particulièrement destiné à l'effeuillage des feuilles de la vigne, comprenant au moins une tête d'effeuillage (1) munie de deux tambours (2) et (3) contrarotatifs, à savoir un premier tambour (2) comportant une paroi latérale cylindrique ajourée (2a) reliant ses deux extrémités libres et un second tambour (3) apte à coopérer en rotation avec le premier tambour (2), un système d'aspiration (4) d'air capable de créer une dépression d'air dans ledit premier tambour (2) et un système d'entraînement (5) en rotation des tambours (2) et (3),
dispositif **caractérisé en ce que** les deux extrémités libres du premier tambour (2) sont ouvertes, **en ce que** le système d'aspiration (4) comprend, d'une part, deux ouvertures d'aspiration principales (6) et (7), à savoir une première ouverture d'aspiration principale (6) et une seconde ouverture d'aspiration principale (7) et, d'autre part, un système de turbine(s) (10) et des moyens de canalisation (8, 9) d'air permettant de relier ce dernier auxdites ouvertures d'aspiration principales (6) et (7) et **en ce que** chaque extrémité libre ouverte du premier tambour (2) est connectée à l'une desdites ouvertures d'aspiration principales (6) ou (7) de sorte à générer, grâce audit système de turbine(s), deux flux d'aspiration d'air dans le premier tambour (2), l'un passant à travers l'une desdites ouvertures et l'autre passant à travers l'autre ouverture, ayant pour effet de créer ensemble une dépression, à double flux d'air, globalement homogène dans ledit premier tambour, sensiblement sur toute sa longueur et **en ce qu'**il comprend un système de motorisation, comprenant au moins un moteur (13), capable d'actionner le système d'entraînement (5) et le système de turbine(s) (10).

2. Dispositif, selon la revendication 1, **caractérisé en ce que** le système de turbine(s) (10) comprend une ou deux turbines aspirante(s) (10c) actionnée(s) par le système de motorisation et **en ce que** le système de turbine(s) (10) comprend deux ouvertures d'aspiration intermédiaires (10a) et (10b), à savoir une première ouverture d'aspiration intermédiaire (10a) et une seconde ouverture d'aspiration intermédiaire (10b), permettant de relier le système de turbine(s) (10) respectivement auxdites ouvertures d'aspiration principales (6) et (7) via les moyens de canalisation d'air (8, 9).

3. Dispositif, selon la revendication 2, **caractérisé en ce que** le système de turbine (10) comprend une turbine aspirante (10c) commune aux deux ouvertures d'aspiration (6) et (7) principales et **en ce que** le système de turbine est prévu, à partir d'une dépression d'air créée par ladite turbine, pour générer les deux flux d'aspiration d'air.

4. Dispositif, selon la revendication 2, **caractérisé en ce que** le système de turbines (10) comprend deux turbines aspirantes (10c) et **en ce que** ledit système de turbines est prévu, d'une part, à partir d'une dépression d'air créée par l'une desdites turbines, pour générer l'un des deux flux d'aspiration d'air et, d'autre part, à partir d'une dépression d'air créée par l'autre turbine, pour générer l'autre flux d'aspiration d'air.

5. Dispositif, selon l'une quelconque des revendications 2 à 4, caractérisé en ce le système de motorisation comprend un moteur (13) unique capable, à lui seul, d'activer à la fois le système d'entraînement (5) et la ou chaque turbine (10c) du système de turbine(s) (10).

6. Dispositif, selon l'une quelconque des revendications 2 à 5, **caractérisé en ce que** les moyens de canalisation d'air (8, 9) consistent en deux conduits (8) et (9), à savoir un premier conduit (8), dont l'une des extrémités forme la première ouverture d'aspiration principale (6) et l'autre extrémité est apte à être connectée à la première ouverture d'aspiration intermédiaire (10a) et un second conduit (9), dont l'une des extrémités forme la seconde ouverture d'aspiration principale (7) et l'autre extrémité est apte à être connectée à la seconde ouverture d'aspiration intermédiaire (10b).

7. Dispositif, selon la revendication 6, **caractérisé en ce que** les deux conduits (8) et (9) présentent une longueur sensiblement identique.

8. Dispositif, selon l'une quelconque des revendications revendication 2 à 7, **caractérisé en ce que** l'axe (10e) de la ou de chaque turbine aspirante (10c) s'étend sensiblement parallèlement aux axes respectifs (2a) et (2b) des tambours (2) et (3).

9. Dispositif, selon la revendication 8, **caractérisé en ce que** le système de turbine(s) (10) comprend une turbine aspirante (10c) et **en ce que** celle-ci s'étend latéralement dans un plan coupant perpendiculairement l'axe du premier tambour (2) sensiblement à égale distance des extrémités libres de ce dernier.

10. Dispositif, selon l'une quelconque des revendications 2 à 9, **caractérisé en ce que** le système de turbine (10) comprend une turbine et **en ce que** ledit système de turbine (10) comprend une enceinte (10d) fermée, la turbine aspirante (10c) étant logée dans l'enceinte (10d) qui comprend, d'une part, deux parois opposées s'étendant de part et d'autre de ladite turbine aspirante (10c) sensiblement perpendiculairement à l'axe (10e) de cette dernière, et **en ce que** la première ouverture d'aspiration intermédiaire (10a) est pratiquée dans l'une desdites parois opposées et la seconde ouverture d'aspiration intermédiaire (10b) est pratiquée dans l'autre paroi opposée et, d'autre part, une ouverture de sortie d'air (10f) pratiquée dans l'une desdites parois ou dans une autre paroi de l'enceinte, préférentiellement sensiblement perpendiculaire auxdites parois opposées.

11. Dispositif, selon l'une quelconque des revendications 2 à 8, **caractérisé en ce que** le système de turbines comprend deux turbines, **en ce que** ledit système de turbines comprend soit une enceinte fermée, soit, le cas échéant, deux enceintes fermées indépendantes l'une de l'autre, chaque turbine aspirante étant logée soit dans l'enceinte, soit, le cas échéant, dans l'une des deux enceintes, **en ce que** la ou chaque enceinte est fermée par une paroi et **en ce que** soit les première et seconde ouvertures d'aspiration intermédiaires sont pratiquées dans la paroi de l'enceinte, soit, le cas échéant, la première ouverture d'aspiration intermédiaire est pratiquée dans la paroi de l'une des deux enceintes et la seconde ouverture d'aspiration intermédiaire est pratiquée dans la paroi de l'autre enceinte.

12. Dispositif, selon l'une quelconque des revendications 1 à 11, caractérisé en ce le premier tambour (2) comporte une cloison de séparation (11), pleine ou ajourée, s'étendant transversalement dans l'espace interne du premier tambour (2) de sorte à séparer ledit espace interne en deux espaces d'aspiration connectés chacun à l'une des ouvertures d'aspirations principales (6) ou (7).

13. Dispositif, selon l'une quelconque des revendications 1 à 12, **caractérisé en ce qu'**il comprend en outre un éjecteur (12) adapté pour être mis en contact de frottement avec le premier tambour (2) et, éventuellement avec le second tambour (3), pour permettre l'éjection des feuilles arrachées par un déplacement relatif de l'éjecteur (12) par rapport audit premier tambour (2), le cas échéant ledit second tambour (3).

14. Dispositif, selon la revendication 13, **caractérisé en ce que** l'éjecteur (12) est un élément allongé, de préférence de forme globalement cylindrique, monté en rotation autour d'un axe (12a) s'étendant sensiblement parallèlement aux axes (3a) et (3b) respectifs des deux tambours (2) et (3) et **en ce que** ledit élément est actionné en rotation grâce au ou à l'un des moteurs (13) d'entraînement via des premiers moyens d'entraînement (14).

15. Dispositif, selon la revendication 14, **caractérisé en ce que** le système d'entraînement (5) des tambours (2) et (3) est activé par la rotation de l'éjecteur (12), l'axe de l'éjecteur (12) étant relié, par l'une de ses extrémités, aux premiers moyens d'entraînement (14) et, par son autre extrémité, audit système d'entraînement (5).

16. Dispositif, selon la revendication 15, **caractérisé en ce que** le système d'entraînement (5) de la ou des turbines consiste en un système d'engrenage à trois roues dentées (5a), (5b) et (5c), à savoir une première roue dentée (5a) entraînant l'axe de rotation (2a) du premier tambour (2) ajouré, une seconde roue dentée (5b) entraînant l'axe de rotation (3a) du second tambour (3) et une troisième roue dentée (5c) entraînée en rotation par l'axe de rotation (12a) de l'éjecteur (12) et **en ce que** lesdites roues dentées (5a), (5b) et (5c) sont engrenées l'une dans l'autre de sorte à permettre la transmission du mouvement de rotation de l'éjecteur (12) aux deux tambours (2) et (3).

17. Dispositif, selon l'une quelconque des revendications 14 à 16, **caractérisé en ce que** l'axe (10e) de la ou de chaque turbine (10c) est actionné en rotation, directement ou indirectement, au moyen du ou de l'un des moteurs (13) par l'intermédiaire de seconds moyens d'entraînement (15).

## Patentansprüche

1. Entlaubungsvorrichtung mit doppeltem Luftstrom, die insbesondere zum Entlauben von Reben bestimmt ist, umfassend mindestens einen Entlaubungskopf (1), der mit zwei gegenläufigen Trommeln (2) und (3) ausgestattet ist, nämlich einer ersten Trommel (2), die eine zylindrisch gelochte Seitenwand (2a) aufweist, die ihre zwei freie Enden verbindet, und einer zweiten Trommel (3), die geeignet ist, in Drehung mit der ersten Trommel (2) zusammenzuwirken, ein Luftansaugsystem (4), das geeignet ist, einen Luftunterdruck in der ersten Trommel (2) zu erzeugen, und ein Drehantriebssystem (5) der Trommeln (2) und (3),
**dadurch gekennzeichnet, dass** die zwei freien Enden der ersten Trommel (2) offen sind, dass das Ansaugsystem (4) einerseits zwei Hauptansaugöffnungen (6) und (7), nämlich eine erste Hauptansaugöffnung (6) und eine zweite Hauptansaugöffnung (7), und andererseits ein Turbinensystem (10) und Mittel zur Kanalisierung von Luft (8, 9) aufweist, die es ermöglichen, dieses Letztere mit den Hauptansaugöffnungen (6) und (7) zu verbinden, und dass jedes offene freie Ende der ersten Trommel (2) mit einer der Hauptansaugöffnungen (6) oder (7) derart verbunden ist, um mittels des Turbinensystems zwei Saugluftströme in der ersten Trommel (2) zu erzeugen, wobei der eine eine der Öffnungen durchquert und der andere die andere Öffnung durchquert, deren Wirkung darin besteht, zusammen einen Unterdruck mit doppeltem Luftstrom zu erzeugen, der insgesamt in der ersten Trommel im Wesentlichen entlang ihrer gesamten Länge homogen ist, und dass sie ein Motorisierungssystem aufweist, das mindestens einen Motor (13) aufweist, der geeignet ist, das Drehantriebssystem (5) und das Turbinensystem (10) zu betätigen.

2. Entlaubungsvorrichtung nach Anspruch 1, **dadurch gekennzeichnet, dass** das Turbinensystem (10) eine oder zwei Saugturbinen (10c) aufweist, die durch das Motorisierungssystem betätigt werden, und dass das Turbinensystem (10) zwei Zwischenansaugöffnungen (10a) und (10b), nämlich eine erste Zwischenansaugöffnung (10a) und eine zweite Zwischenansaugöffnung (10b), aufweist, die es ermöglichen, das Turbinensystem (10) jeweils mit den Hauptansaugöffnungen (6) und (7) über die Mittel zur Kanalisierung von Luft (8, 9) zu verbinden.

3. Entlaubungsvorrichtung nach Anspruch 2, **dadurch gekennzeichnet, dass** das Turbinensystem (10) eine Saugturbine (10c) aufweist, die den zwei Hauptansaugöffnungen (6) und (7) gemeinsam ist, und dass das Turbinensystem vorgesehen ist, um ausgehend von einem Luftunterdruck, der durch die Turbine erzeugt wird, die zwei Saugluftströme zu erzeugen.

4. Entlaubungsvorrichtung nach Anspruch 2, **dadurch gekennzeichnet, dass** das Turbinensystem (10) zwei Saugturbinen (10c) aufweist, und dass das Turbinensystem vorgesehen ist, um einerseits ausgehend von einem Luftunterdruck, der durch eine der Turbinen erzeugt wird, den einen der zwei Saugluftströme zu erzeugen, und andererseits ausgehend von einem Luftunterdruck, der durch die andere Turbine erzeugt wird, den anderen Saugluftstrom zu erzeugen.

5. Entlaubungsvorrichtung nach einem der Ansprüche 2 bis 4, **dadurch gekennzeichnet, dass** das Motorisierungssystem einen einzigen Motor (13) aufweist, der geeignet ist, selbst gleichzeitig das Antriebssystem (5) und die oder jede Turbine (10c) des Turbinensystems (10) zu betätigen.

6. Entlaubungsvorrichtung nach einem der vorhergehenden Ansprüche 2 bis 5, **dadurch gekennzeichnet, dass** die Mittel zur Kanalisierung von Luft (8, 9) aus zwei Leitungen (8) und (9) bestehen, nämlich einer ersten Leitung (8), wovon das eine der Enden die erste Hauptansaugöffnung (6) bildet und das andere Ende geeignet ist, mit der ersten Zwischenansaugöffnung (10a) verbunden zu werden, und einer zweiten Leitung (9), wovon das eine der Enden die zweite Hauptansaugöffnung (7) bildet und das andere Ende geeignet ist, mit der zweiten Zwischenansaugöffnung (10b) verbunden zu werden.

7. Entlaubungsvorrichtung nach Anspruch 6, **dadurch gekennzeichnet, dass** die zwei Leitungen (8) und (9) eine im Wesentlichen gleiche Länge aufweisen.

8. Entlaubungsvorrichtung nach einem der Ansprüche 2 bis 7, **dadurch gekennzeichnet, dass** sich die Achse (10e) der oder jeder Saugturbine (10c) im Wesentlichen parallel zu den jeweiligen Achsen (2a) und (2b) der Trommeln (2) und (3) erstreckt.

9. Entlaubungsvorrichtung nach Anspruch 8, **dadurch gekennzeichnet, dass** das Turbinensystem (10) eine Saugturbine (10c) aufweist und dass sich diese seitlich in einer Ebene erstreckt, die die Achse der ersten Trommel (2) in einem im Wesentlichen gleichen Abstand von den freien Enden von dieser Letzteren senkrecht schneidet.

10. Entlaubungsvorrichtung nach einem der Ansprüche 2 bis 9, **dadurch gekennzeichnet, dass** das Turbinensystem (10) eine Turbine aufweist, und dass das Turbinensystem (10) einen geschlossen Behälter (10d) aufweist, wobei die Saugturbine (10c) in dem geschlossenen Behälter (10d) angeordnet ist, der einerseits zwei gegenüberliegende Wände, die sich auf beiden Seiten der Saugturbine (10c) im Wesentlichen senkrecht zu der Achse (10e) von dieser Letzteren erstrecken, und dadurch, dass die erste Zwischenansaugöffnung (10a) in einer der gegenüberliegenden Wände ausgebildet ist und die zweite Zwischenansaugöffnung (10b) in der anderen gegenüberliegenden Wand ausgebildet ist, und andererseits eine Luftaustrittsöffnung (10f) aufweist, die in einer der Wände oder in einer anderen Wand des Behälters, vorzugsweise im Wesentlichen senkrecht zu den gegenüberliegenden Wänden, ausgebildet ist.

11. Entlaubungsvorrichtung nach einem der Ansprüche 2 bis 8, **dadurch gekennzeichnet, dass** das Turbinensystem zwei Turbinen aufweist, dass das Turbinensystem entweder einen geschlossen Behälter oder gegebenenfalls zwei voneinander unabhängige geschlossene Behälter aufweist, wobei jede Saugturbine entweder in dem geschlossenen Behälter oder gegebenenfalls in einem der zwei geschlossenen Behälter angeordnet ist, und dadurch, dass der oder jeder Behälter durch eine Wand geschlossen ist, und dass entweder die erste und die zweite Zwischenansaugöffnung in der Wand des Behälters ausgebildet sind oder gegebenenfalls die erste Zwischenansaugöffnung in der Wand von einem der zwei Behälter ausgebildet ist, und die zweite Zwischenansaugöffnung in der Wand des anderen Behälters ausgebildet ist.

12. Entlaubungsvorrichtung nach einem der Ansprüche 1 bis 11, **dadurch gekennzeichnet, dass** die erste Trommel (2) eine vollwandige oder gelochte Trennwand (11) aufweist, die sich quer im Innenraum der ersten Trommel (2) derart erstreckt, um den Innenraum in zwei Saugräume zu trennen, die jeweils mit einer der Hauptansaugöffnungen (6) oder (7) verbunden sind.

13. Entlaubungsvorrichtung nach einem der Ansprüche 1 bis 12, **dadurch gekennzeichnet, dass** sie ferner einen Auswerfer (12) aufweist, der geeignet ist, um mit der ersten Trommel (2) und gegebenenfalls mit der zweiten Trommel (3) in Reibungskontakt gebracht zu werden, um das Auswerfen der abgerissenen Blätter durch eine Relativbewegung des Auswerfers (12) in Bezug auf die erste Trommel (2), gegebenenfalls die zweite Trommel (3), zu ermöglichen.

14. Entlaubungsvorrichtung nach Anspruch 13, **dadurch gekennzeichnet, dass** der Auswerfer (12) ein längliches Element, vorzugsweise von im Allgemeinen zylindrischer Form ist, das drehbar um eine Achse (12a) montiert ist, die sich im Wesentlichen parallel zu den Achsen (3a) und (3b) jeweils der zwei Trommeln (2) und (3) erstreckt, und dass das Element durch den oder einen der Antriebsmotoren (13) über erste Antriebsmittel (14) in Drehung versetzt wird.

15. Entlaubungsvorrichtung nach Anspruch 14, **dadurch gekennzeichnet, dass** das Antriebssystem (5) der Trommeln (2) und (3) durch die Drehung des Auswerfers (12) betätigt wird, wobei die Achse des Auswerfers (12) durch eines ihrer Enden mit den ersten Antriebsmitteln (14) und durch ihr anderes Ende mit dem Antriebssystem (5) verbunden ist.

16. Entlaubungsvorrichtung nach Anspruch 15, **dadurch gekennzeichnet, dass** das Antriebssystem (5) der Turbine oder der Turbinen aus einem Getriebesystem mit drei Zahnrädern (5a), (5b) und (5c) besteht, nämlich einem ersten Zahnrad (5a), das die Drehachse (2a) der ersten durchbrochenen Trommel (2) antreibt, einem zweiten Zahnrad (5b), das die Drehachse (3a) der zweiten Trommel (3) antreibt, und einem dritten Zahnrad (5c), das durch die Drehachse (12a) des Auswerfers (12) in Drehung versetzt wird, und dass die Zahnräder (5a), (5b) und (5c) derart ineinander greifen, um die Übertragung der Drehbewegung des Auswerfers (12) auf die beiden Trommeln (2) und (3) zu ermöglichen.

17. Entlaubungsvorrichtung nach einem der Ansprüche 14 bis 16, **dadurch gekennzeichnet, dass** die Achse (10e) der oder jeder Turbine (10c) direkt oder indirekt durch den oder einen der Motoren (13) über zweite Antriebsmittel (15) in Drehung versetzt wird.

## Claims

1. Dual-flow stripping device, more particularly intended for stripping leaves from a vine, comprising at least one stripping head (1) equipped with two counter-rotating drums (2) and (3), namely a first drum (2) comprising a perforated cylindrical side wall (2a) connecting its two free ends and a second drum (3) able to work in rotation with the first drum (2), an air suction system (4) capable of creating negative air pressure in said first drum (2) and a system (5) for driving the drums (2) and (3) in rotation,
the device being **characterised in that** the two free ends of the first drum (2) are open, **in that** the suction system (4) comprises, on the one hand, two main suction openings (6) and (7), namely a first main suction opening (6) and a second main suction opening (7), and, on the other hand, a turbine system (10) and air channelling means (8, 9) making it possible to connect the latter to said main suction openings (6) and (7), and **in that** each open free end of the first drum (2) is connected at one of said main suction openings (6) or (7) in such a way as to generate, using said turbine system, two air suction streams in the first drum (2), one passing through one of said openings and the other passing through the other opening, having the effect of creating together a negative pressure, with double air streams, uniform overall in said first drum, essentially over its entire length, and **in that** it comprises a motorisation system, comprising at least one motor (13), capable of actuating the drive system (5) and the turbine system (10).

2. Device, according to claim 1, **characterised in that** the turbine system (10) comprises one or two suction turbines (10c) actuated by the motorisation system and **in that** the turbine system (10) comprises two intermediate suction openings (10a) and (10b), namely a first intermediate suction opening (10a) and a second intermediate suction opening (10b), making it possible to connect the turbine system (10) respectively to said main suction openings (6) and (7) via the air channelling means (8, 9).

3. Device, according to claim 2, **characterised in that** the turbine system (10) comprises a suction turbine (10c) that is common to the two main suction openings (6) and (7) and **in that** the turbine system is provided, from negative air pressure created by said turbine, to generate the two air suction streams.

4. Device, according to claim 2, **characterised in that** the turbine system (10) comprises two suction turbines (10c) and **in that** said turbine system is provided, on the one hand, from negative air pressure created by one of said turbines, to generate one of the two air suction streams and, on the other hand, from negative air pressure created by the other turbine, to generate the other air suction stream.

5. Device, according to any one of claims 2 to 4, **characterised in that** the motorisation system comprises a single motor (13) that is capable, by itself, of activating both the drive system (5) and the - or each - turbine (10c) of the turbine system (10).

6. Device, according to any one of claims 2 to 5, **characterised in that** the air channelling means (8, 9) consist of two pipes (8) and (9), namely a first pipe (8), of which one of the ends forms the first main suction opening (6) and the other end is able to be connected to the first intermediate suction opening (10a), and a second pipe (9), of which one of the ends forms the second main suction opening (7) and the other end is able to be connected to the second intermediate suction opening (10b).

7. Device, according to claim 6, **characterised in that** the two pipes (8) and (9) are of essentially identical length.

8. Device, according to any one of claims 2 to 7, **characterised in that** the shaft (10e) of the or of each suction turbine (10c) extends essentially parallel to the respective shafts (2a) and (2b) of the drums (2) and (3).

9. Device, according to claim 8, **characterised in that** the turbine system (10) comprises a suction turbine (10c) and **in that** the latter extends laterally in a plane perpendicularly cutting the shaft of the first drum (2) essentially equidistant between the free ends of the latter.

10. Device, according to any one of claims 2 to 9, **characterised in that** the turbine system (10) comprises a turbine and **in that** said turbine system (10) comprises a closed chamber (10d), with the suction turbine (10c) being housed in the chamber (10d) that comprises, on the one hand, two opposite walls extending on both sides of said suction turbine (10c) that is essentially perpendicular to the shaft (10e) of the latter, and **in that** the first intermediate suction opening (10a) is made in one of said opposite walls, and the second intermediate suction opening (10b) is made in the other opposite wall, and, on the other hand, an air discharge opening (10f) is made in one of said walls or in another wall of the chamber, preferably essentially perpendicular to said opposite walls.

11. Device, according to any one of claims 2 to 8, **characterised in that** the turbine system comprises two turbines, **in that** said turbine system comprises either a closed chamber, or two closed chambers that are independent of one another, with each suction turbine being housed in the chamber, or, optionally, in one of the two chambers, **in that** the or each chamber is closed by a wall, and **in that** the first and second intermediate suction openings are made in the wall of the chamber, or, optionally, the first intermediate suction opening is made in the wall of one of the two chambers and the second intermediate suction opening is made in the wall of the other chamber.

12. Device, according to any one of claims 1 to 11, **characterised in that** the first drum (2) comprises a separating partition (11), solid or perforated, extending transversely into the inside space of the first drum (2) in such a way as to separate said inside space into two suction spaces, each connected to one of the main suction openings (6) or (7).

13. Device, according to any one of claims 1 to 12, **characterised in that** it also comprises an ejector (12) that is suitable for making frictional contact with the first drum (2) and, optionally with the second drum (3), to make possible the ejection of detached leaves by a relative displacement of the ejector (12) relative to said first drum (2), if necessary said second drum (3).

14. Device, according to claim 13, **characterised in that** the ejector (12) is an elongated element, preferably of an overall cylindrical shape, mounted in rotation around a shaft (12a) that extends essentially parallel to the respective shafts (3a) and (3b) of the two drums (2) and (3) and **in that** said element is actuated in rotation using a drive motor or one of the drive motors (13) via the first drive means (14).

15. Device, according to claim 14, **characterised in that** the drive system (5) of the drums (2) and (3) is activated by the rotation of the ejector (12), the shaft of the ejector (12) being connected, by one of its ends, to the first drive means (14), and, by its other end, to said drive system (5).

16. Device, according to claim 15, **characterised in that** the drive system (5) of the turbine or turbines consists of a gear system with three cog-wheels (5a), (5b) and (5c), namely a first cog-wheel (5a) driving the rotary shaft (2a) of the first perforated drum (2), a second cog-wheel (5b) driving the rotary shaft (3a) of the second drum (3), and a third cog-wheel (5c) driven in rotation by the rotary shaft (12a) of the ejector (12), and wherein said cog-wheels (5a), (5b) and (5c) are engaged with one another in such a way as to make possible the transmission of the rotational movement from the ejector (12) to the two drums (2) and (3).

17. Device, according to any one of claims 14 to 16, **characterised in that** the shaft (10e) of the or of each turbine (10c) is actuated in rotation, directly or indirectly, by means of the motor or of one of the motors (13) by means of second drive means (15).
